# EUROPÄISCHE PATENTSCHRIFT

(11) **EP 3 102 970 B1**
(45) Veröffentlichungstag und Bekanntmachung des Hinweises auf die Patenterteilung: **26.06.2019**
(21) Anmeldenummer: 15702817.6
(22) Anmeldetag: 06.02.2015
(51) Int. Cl.: G01W 1/14

(54) **HAGELSENSOR**
HAIL SENSOR
CAPTEUR DE GRÊLE

(30) Priorität: 07.02.2014 EP 14154393
(43) Veröffentlichungstag der Anmeldung: 14.12.2016
(73) Patentinhaber: Bundesrepublik Deutschland, vertreten durch das BMVI, dieses vertreten durch den Deutschen Wetterdienst, 63067 Offenbach (DE)
(72) Erfinder: LANZINGER, Eckhard, 22393 Hamburg (DE)
(74) Vertreter: Eisenführ Speiser
(86) Internationale Anmeldenummer: PCT/EP2015/052563
(87) Internationale Veröffentlichungsnummer: WO 2015/118133

(56) Entgegenhaltungen:
- EP-A1- 0 422 553
- FR-A1- 2 595 473
- US-A- 4 904 894

## Beschreibung

Die Erfindung betrifft einen Hagelsensor mit einer Prallfläche, auf die Niederschlag auftreffen kann, und wenigstens einem Wandler, welcher so angeordnet und ausgebildet ist, dass er im Falle einer Auslenkung der Prallfläche in Folge auf die Prallfläche auftreffenden Niederschlags in Form von Hagel ein entsprechendes Wandler-Ausgangssignal abgibt.

Niederschlagssensoren mit einer Prallfläche und einem Wandler zum Registrieren von beim Auftreffen von Niederschlagsteilchen auf die Prallfläche erzeugten Schwingungen sind grundsätzlich bekannt und beispielsweise in US4904894 A, DE 103 30 128 A1, EP 0 422 553 A1, FR 2 595 473, WO 03/027720 A1 oder WO 2013/147605 A2 beschrieben. Bei derartigen Niederschlagssensoren lenkt ein auf die Prallfläche auftreffendes Niederschlagsteilchen die Prallfläche aus und versetzt sie typischerweise in Schwingung. Eine Auslenkung der Prallfläche kann mittels eines entsprechenden Wandlers erfasst werden, der ein dementsprechendes Wandler-Ausgangssignal liefert. Durch Auswertung des Wandler-Ausgangssignals lässt sich ermitteln, ob ein Niederschlagsteilchen auf die Prallfläche aufgetroffen ist. Dies kann beispielsweise anhand einer Analyse der Amplitude des Wandler-Ausgangssignals erfolgen.

Bei derartigen Niederschlagssensoren besteht regelmäßig der Wunsch, unterschiedliche Arten von Niederschlag, beispielsweise Regen, Schnee oder Hagel, voneinander zu unterscheiden. Insbesondere besteht der Wunsch, Niederschlag in Form von Hagel zu erkennen und sicher von allen anderen Niederschlagsarten, beispielsweise in Form von Regen, zu unterscheiden. Dies ist jedoch nicht einfach.

Der Erfindung liegt die Aufgabe zu Grunde, einen Hagelsensor zu schaffen, der möglichst zuverlässig und einfach Niederschlag in Form von Hagel erfassen kann.

Erfindungsgemäß wird diese Aufgabe durch einen Hagelsensor der eingangs genannten Art gelöst, bei dem die Prallfläche von mit wenigstens annähernd gleichem Abstand voneinander und wenigstens annähernd parallel zueinander geführten und sich nicht kreuzenden Drähten oder Drahtabschnitten, Seilen oder Seilabschnitten oder dergleichen gebildet ist, welchen jeweils ein Wandler zugeordnet ist. Dabei besteht zwischen den Drähten, Seilen oder dergleichen ein Abstand, durch den flüssiger Niederschlag nach Auftreten auf die Prallfläche leicht hindurch treten kann.

Eine derartige Prallfläche wird von flüssigem Niederschlag weit weniger ausgelenkt als von festem Niederschlag, weil auf die Prallfläche treffende Wassertropfen von den Drähten, Seilen oder dergleichen "zerschnitten" werden, sodass beim Auftreffen flüssigen Niederschlags auf eine erfindungsgemäße Prallfläche kaum eine Impulsübertragung erfolgt und daher die Prallfläche auch praktisch nicht ausgelenkt und zu Schwingungen angeregt wird. Hagelkörner hingegen treffen auf die erfindungsgemäße Prallfläche ähnlich auf wie auf herkömmliche, geschlossene Prallflächen und lenken die Prallfläche in Folge der Impulsübertragung entsprechend aus. Dabei besitzt die Prallfläche durch die annähernd parallele Anordnung der Drähten oder Drahtabschnitten, Seilen oder Seilabschnitten oder dergleichen überall die gleiche Detektionswahrscheinlichkeit für den Niederschlag einer jeweiligen Art und Größe. Daraus resultiert ein Wandler-Ausgangssignal, dass sich von einem Wandler-Ausgangssignal beim Auftreffen von beispielsweise Regen oder Schnee auf die Prallfläche deutlich und vor allem leicht erkennbar unterscheidet. Auch alle anderen meteorologischen Einflussgrößen, insbesondere Wind, können nicht zu einer nennenswerten Auslenkung der Prallfläche führen. Damit erlaubt der erfindungsgemäße Hagelsensor eine eindeutige Erkennung von Hagel durch eine zuverlässige und einfache Unterscheidung von Niederschlag in Form von Hagel von anderem Niederschlag. Der erfindungsgemäße Hagelsensor eignet sich damit als zuverlässiger Hageldetektor und Hagelsensor.

Vorzugsweise beträgt der Abstand (und damit der lichte Raum) zwischen den die Prallfläche bildenden Drähten oder Drahtabschnitten, Seilen oder Seilabschnitten oder dergleichen zwischen 1 mm und 5 mm und ist damit etwas kleiner als der Durchmesser typischer Hagelkörner, welcher definitionsgemäß mindestens 5 mm beträgt. Solche Hagelkörner können damit nicht ohne Impulsübertragung durch die erfindungsgemäße Prallfläche hindurchtreten.

Die die Prallfläche bildenden Drähte oder Drahtabschnitte, Seile oder Seilabschnitte oder dergleichen haben vorzugsweise einen Durchmesser von höchstens 1 mm, sodass sie von auftreffendem flüssigem Niederschlag nur wenig oder gar nicht ausgelenkt werden. Die maximale Auslenkung der die Prallfläche bildenden Drähte oder Drahtabschnitte, Seile oder Seilabschnitte oder dergleichen wird zudem über deren mechanische Spannung eingestellt.

Um eine unerwünschte Akkumulation von Hagelkörnern auf der Prallfläche zu vermeiden kann diese leicht schräg angeordnet werden, damit die Hagelkörner darauf abrollen können. Die Akkumulation von Schnee auf der Prallfläche ist bei den parallel gespannten, weniger als 1 mm dicken Drähten oder Drahtabschnitten, Seilen oder Seilabschnitten oder dergleichen kaum möglich. Die die Prallfläche bildenden Drähte oder Drahtabschnitte können auch beheizbar sein. Somit können eine Schneeakkumulation oder eine Raufrostbildung zuverlässig durch Beheizen der Drähte oder Drahtabschnitte mittels einer angelegten Gleichspannung verhindert werden.

Der Wandler weist vorzugsweise eine Spule oder ein Piezoelement auf und ist angeordnet und ausgebildet, um eine Schwingung wenigstens eines des die Prallfläche bildenden Drahtes oder Drahtabschnitts, Seiles oder Seilabschnitts oder dergleichen zu erfassen und dann entsprechend das Wandler-Ausgangssignal auszugeben.

Die Verwendung einer Spule als Wandler hat den Vorteil, dass akustische Signale aus der Umgebung nicht erfasst werden und damit eine Störung der Messung insbesondere durch Umweltgeräusche natürlichen oder künstlichen Ursprungs nicht erfolgen kann. Bei Verwendung eines Piezoelementes ist darauf zu achten, dass akustische Signale aus der Umwelt nicht in das Messsignal einkoppeln.

Die die Prallfläche bildenden Drähte oder Drahtabschnitte, Seile oder Seilabschnitte oder dergleichen sind vorzugsweise Metalldrähte, die aus einem einzelnen Filament gebildet sind (und damit als Draht bezeichnet werden) oder auch von mehreren Metallfilamenten gebildet sein können und daher als Seile bezeichnet werden. Jedoch können die Seile grundsätzlich auch aus einem oder mehreren Materialien bestehen.

Im Falle einer Prallfläche, die von mehreren, parallel zueinander geführten Drähten oder Drahtabschnitten, Seilen oder Seilabschnitten oder dergleichen gebildet ist, können diese Draht- oder Seilabschnitte auch Abschnitte eines einzelnen hin- und hergeführten Drahtes oder Seils sein, so ähnlich wie dies beispielsweise bei den die Bespannung eines Tennisschlägers bildenden Seilen der Fall ist. Dabei ist der einzelne Draht oder das einzelne Seil über einen Rahmen gespannt. Dies ist insbesondere dann vorteilhaft, wenn die Prallfläche beheizbar ausgebildet ist, da dann nur an dem einzelnen über den Rahmen gespannten Draht eine Gleichspannung angelegt werden muss, was beispielsweise eine einfache Reparatur ermöglichen kann. Außerdem lässt sich durch eine Überwachung des Stromes die Integrität der Prallfläche überwachen.

Vorzugsweise ist der wenigstens eine Wandler mit einer Speichereinheit oder einer Auswerteeinheit oder beidem verbunden, die dem Speichern oder Auswerten des Wandler-Ausgangssignals oder beidem dienen. Falls der Wandler lediglich mit einem Speicher zum Aufzeichnen des Wandler-Ausgangssignals verbunden ist, kann dieser Speicher später ausgelesen und der Zeitverlauf des Wandler-Ausgangssignals im Nachhinein analysiert werden. Ist der Wandler hingegen unmittelbar mit einer Auswerteeinheit verbunden, kann das jeweilige Wandler-Ausgangssignal auch in Echtzeit von der Auswerteeinheit analysiert werden.

Die Auswerteeinheit ist vorzugsweise dazu ausgebildet, Zeitabschnitte des Wandler-Ausgangssignals einem Aufprall eines Hagelkorns zuzuordnen. Das bedeutet, dass die Auswerteeinheit das Wandler-Ausgangssignal analysiert um solche Signalabschnitte zu identifizieren, die für das Auftreffen eines Hagelkorns charakteristisch sind. Vorzugsweise geschieht dies beispielsweise durch Auswertung der Amplitude des Wandler-Ausgangssignals. Wenn die Amplitude beispielsweise einen bestimmten Schwellwert überschreitet, ist dies ein Anzeichen dafür, dass eine Impulsübertragung auf die Prallfläche stattgefunden hat, wie sie für den Aufprall eines Hagelkorns typisch ist. Neben einem einfachen Amplitudenkriterium kann die Auswerteeinheit jedoch auch weitere Formen der Signalanalyse zusätzlich oder alternativ durchführen, um den Aufprall eines jeweiligen Hagelkorns zu detektieren.

Es ist besonders vorteilhaft, wenn die Auswerteeinheit so ausgebildet ist, dass sie nicht nur das Auftreffen beliebiger Hagelkörner identifizieren kann, sondern möglichst auch noch eine Zuordnung für das Auftreffen von Hagelkörnern charakteristischer Signalabschnitte zu verschiedenen Hagelkorngrößen durchführen kann. Wenn die Auswerteeinheit beispielsweise ein relativ einfaches Amplitudenkriterium realisiert, können beispielsweise statt eines einzelnen Schwellwerts für die Amplitude mehrere Schwellwerte vorgesehen sein, so dass die Signalabschnitte damit die Hagelkörner in verschiedene Kategorien eingeteilt werden können, die unterschiedlich großen Hagelkörnern entsprechen.

Die Erfindung soll nun anhand eines Ausführungsbeispiels in Bezug auf die Figuren näher erläutert werden. Von den Figuren zeigt
- Fig. 1:: eine seitliche Schnittansicht eines erfindungsgemäßen Hagelsensors;
- Fig. 2:: eine Draufsicht auf den erfindungsgemäßen Hagelsensor.

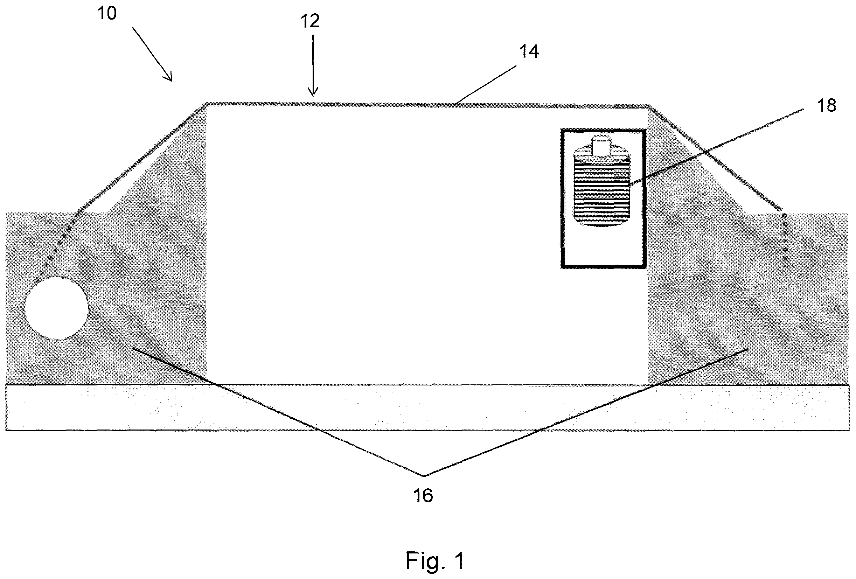

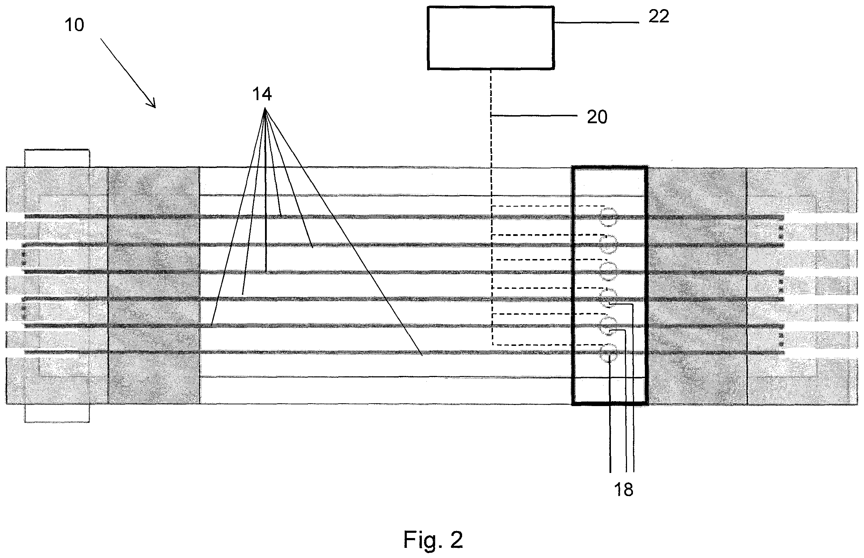

Fig. 1 und 2 zeigen einen Hagelsensor 10 mit einer Prallfläche 12, die von einzelnen Drahtabschnitten 14 eines Drahtes gebildet ist. Die einzelnen Drahtabschnitte 14 sind ähnlich wie die Saiten einer Harfe oder einer Gitarre oder die Drahtanschnitte eines Eierschneiders parallel zueinander gespannt und haben voneinander alle einen gleichen und gleichbleibenden Abstand, der beispielsweise zwischen 1 mm und 5 mm, vorzugsweise etwa 5 mm beträgt. Die einzelnen Drahtabschnitte14 sind Drahtabschnitte eines einzelnen Drahtes, der über einen Rahmen 16 gespannt ist, wie dies insbesondere der Fig. 2 leicht zu entnehmen ist.

Jedem Drahtabschnitt 14 ist jeweils ein Wandler 18 zugeordnet, der eine Spule aufweist, mittels der Auslenkungen und Schwingungen der Drahtabschnitte 14 erfasst werden können. Die Wandler 18 liefern jeweils ein entsprechendes Wandler-Ausgangssignal, welches über entsprechende Signalleitungen 20 einer Auswerteeinheit 22 zugeführt wird.

Die Auswerteeinheit 22 ist ausgebildet das Wandler-Ausgangssignal zu analysieren um solche Signalabschnitte zu identifizieren, die für das Auftreffen eines Hagelkorns charakteristisch sind. Vorzugsweise wertet die Auswerteeinheit wenigstens die Amplitude des Wandler-Ausgangssignals aus. Wenn die Amplitude des Wandler-Ausgangssignals beispielsweise einen bestimmten Schwellwert überschreitet, ist dies ein Anzeichen dafür, dass eine Impulsübertragung auf die Prallfläche mit einer Größenordnung stattgefunden hat, wie sie für den Aufprall eines Hagelkorns typisch ist. Neben einem einfachen Amplitudenkriterium kann die Auswerteeinheit jedoch auch weitere Formen der Signalanalyse zusätzlich oder alternativ durchführen, um den Aufprall eines jeweiligen Hagelkorns zu detektieren und vom Auftreffen anderer Objekte zu differenzieren.

Im Ausführungsbeispiel ist die Auswerteeinheit so ausgebildet, dass sie nicht nur das Auftreffen beliebiger Hagelkörner identifizieren kann, sondern auch noch eine Zuordnung für das Auftreffen von Hagelkörnern charakteristischer Signalabschnitte zu verschiedenen Hagelkorngrößen durchführen kann. Hierzu wendet die Auswerteeinheit beispielsweise ein relativ einfaches Amplitudenkriterium an, gemäß dem statt eines einzelnen Schwellwerts für die Amplitude mehrere verschieden hohe Schwellwerte vorgesehen sind, die unterschiedlich großen Auslenkungen eines jeweiligen Drahtabschnitts 14 der Prallfläche 12 entsprechen, so dass die Signalabschnitte des Wandler-Ausgangssignals und dementsprechend die eine jeweilige Auslenkung des Wandler-Ausgangssignals verursachenden Hagelkörner in verschiedene Kategorien eingeteilt werden können, die unterschiedlich großen Hagelkörnern entsprechen.

Der die Drahtabschnitte 14 bildende Draht ist in dem Ausführungsbeispiel ein Metalldraht mit einem einzigen Element, also ein Draht im engeren Sinne. Alternativ könnte auch ein Seil mit mehreren Filamenten vorgesehen sein, die vorzugsweise aus Metall bestehen.

## Patentansprüche

1. Hagelsensor (10) mit einer Prallfläche (12), auf die Niederschlag auftreffen kann, die von mit wenigstens annähernd gleichem Abstand voneinander und wenigstens annähernd parallel zueinander geführten und sich nicht kreuzenden Drähten oder Drahtabschnitten (14), Seilen oder Seilabschnitten gebildet ist, so dass zwischen den Drähten oder Drahtabschnitten (14), Seilen oder Seilabschnitten ein Abstand besteht, durch den flüssiger Niederschlag nach Auftreffen auf die Prallfläche (12) leicht hindurchtreten kann, wobei den Drähten oder Drahtabschnitten (14), Seilen oder Seilabschnitten jeweils ein Wandler (18) zugeordnet ist, welcher so angeordnet und ausgebildet ist, dass er im Falle einer Auslenkung der Prallfläche (12) infolge auf die Prallfläche (12) auftreffenden Niederschlags ein entsprechendes Wandler-Ausgangssignal abgibt.

2. Hagelsensor nach Anspruch 1, **dadurch gekennzeichnet, dass** der Abstand zwischen den die Prallfläche (12) bildenden Drähten oder Drahtabschnitten (14), Seilen oder Seilabschnitten zwischen 1 mm und 5 mm beträgt.

3. Hagelsensor nach Anspruch 1 oder 2, **dadurch gekennzeichnet, dass** die die Prallfläche (12) bildenden Drähte oder Drahtabschnitte (14), Seile oder Seilabschnitte einen Durchmesser von höchstens 1 mm haben.

4. Hagelsensor nach mindestens einem der Ansprüche 1 bis 3, **dadurch gekennzeichnet, dass** die die Prallfläche (12) bildenden Drähte oder Drahtabschnitte (14), Seile oder Seilabschnitte Abschnitte eines einzelnen Drahtes oder eines einzelnen Seiles sind, wobei der einzelne Draht oder das einzelne Seil über einen Rahmen (16) gespannt ist.

5. Hagelsensor nach mindestens einem der Ansprüche 1 bis 4, **dadurch gekennzeichnet, dass** die die Prallfläche (12) bildenden Drähte oder Drahtabschnitte (14) mittels einer angelegten Gleichspannung beheizbar sind.

6. Hagelsensor nach mindestens einem der Ansprüche 1 bis 5, **dadurch gekennzeichnet, dass** jeder Wandler (18) eine Spule oder ein Piezoelement aufweist, der angeordnet und ausgebildet, um eine Auslenkung und/oder Schwingung wenigstens eines der die Prallfläche (12) bildenden Drähte oder Drahtabschnitte (14), Seile oder Seilabschnitte zu erfassen und ein entsprechendes elektrisches Signal auszugeben.

7. Hagelsensor nach mindestens einem der Ansprüche 1 bis 6, **dadurch gekennzeichnet, dass** die Wandler (18) mit einer Speichereinheit und/oder einer Auswerteeinheit (22) zum Speichern und/oder Auswerten der jeweiligen Wandler-Ausgangssignale verbunden ist.

8. Hagelsensor nach Anspruch 7, **dadurch gekennzeichnet, dass** die Auswerteeinheit (22) ausgebildet ist, eine Amplitude der jeweiligen Wandler-Ausgangssignale derart auszuwerten, dass die Auswerteeinheit (22) Zeitabschnitten der jeweiligen Wandler-Ausgangssignale einem Aufprall eines Hagelkorns zuordnet.

9. Hagelsensor nach Anspruch 8, **dadurch gekennzeichnet, dass** die Auswerteeinheit (22) ausgebildet ist, eine Amplitude der jeweiligen Wandler-Ausgangssignale derart auszuwerten, dass die Auswerteeinheit (22) einen jeweiligen einem Aufprall eines Hagelkorns zugeordneten Zeitabschnitten der jeweiligen Wandler-Ausgangssignale einer von mehreren verschiedenen Hagelkorngrößen zuordnet.

## Claims

1. A hail sensor (10) having an impact surface (12), on which precipitation can impinge and which is formed from wires or wire sections (14), cords or cord sections which are guided in a parallel manner at at least approximately equal distances from one another and do not cross, so that, between the wires or wire sections (14), cords or cord sections, there is a distance through which liquid precipitation can easily pass after striking the impact surface (12) wherein to each of the wires or wire sections (14), cords or cord sections a converter (18) is assigned which is arranged and formed in such a way that, in case of a deflection of the impact surface (12) as a result of precipitation striking the impact surface (12), said a corresponding converter output signal surrenders.

2. The hail sensor as claimed in claim 1, **characterized in that** the distance between the wires or wire sections (14), cords or cord sections forming the impact surface (12) is between 1 mm and 5 mm.

3. The hail sensor as claimed in claim 1 or 2, **characterized in that** the wires or wire sections (14), cords or cord sections forming the impact surface (12) have a diameter of at most 1 mm.

4. The hail sensor as claimed in at least one of claims 1 to 3, **characterized in that** the wires or wire sections (14), cords or cord sections forming the impact surface (12) are sections of a single wire or a single cord, wherein the individual wire or the individual cord is stretched over a frame (16).

5. The hail sensor as claimed in at least one of claims 1 to 4, **characterized in that** the wires or wire sections (14) forming the impact surface (12) by means of an applied voltage DC are heatable.

6. The hail sensor as claimed in at least one of claims 1 to 5, **characterized in that** each converter (18) has a coil or a piezoelectric element which is arranged and formed to detect a deflection and/or oscillation of at least one of the wires or wire sections, cords or cord section forming the impact surface (12) and to output a corresponding electrical signal.

7. The hail sensor as claimed in at least one of claims 1 to 6, **characterized in that** the converter (18) is connected to a memory unit and/or an evaluation unit (22) for storing and/or evaluating the respective converter output signals.

8. The hail sensor as claimed in claim 7, **characterized in that** the evaluation unit (22) is designed to evaluate an amplitude of the respective converter output signals in such a way that the evaluation unit (22) assigns time sections of the respective converter output signals to an impingement of a hailstone.

9. The hail sensor as claimed in claim 8, **characterized in that** the evaluation unit (22) is designed to evaluate an amplitude of the respective converter output signals in such a way that the evaluation unit (22) assigns a respective time section of the respective converter output signals associated with an impingement of a hailstone to one or more different hailstone sizes.

## Revendications

1. Capteur (10) de grêle comportant une surface (12) de rebond, sur laquelle des précipitations peuvent tomber, et qui est formé par des fils métalliques ou des tronçons (14) de fil métallique, des cordes ou des tronçons de corde, qui sont guidés en étant au moins à peu près à la même distance les uns des autres et en étant au moins à peu près parallèles les uns aux autres et qui ne se croisent pas, de telle sorte qu'il existe entre les fils métalliques ou les tronçons (14) de fil métallique, les cordes ou les tronçons de corde, un espace par lequel les précipitations liquides peuvent entrer facilement après impact sur la surface (12) de rebond, étant associé aux fils métalliques ou aux tronçons (14) de fil métallique, aux cordes ou aux tronçons de corde, chaque fois un convertisseur (18), qui est monté et configuré de telle manière que, dans le cas d'une déformation de la surface (12) de rebond à la suite de précipitations impactant la surface (12) de rebond, il fournit un signal de sortie de convertisseur correspondant.

2. Capteur de grêle suivant la revendication 1, **caractérisé en ce que** l'espace, entre les fils métalliques ou tronçons (14) de fil métallique, cordes ou tronçons de corde formant la surface (12) de rebond, est compris entre 1 mm et 5 mm.

3. Capteur de grêle suivant la revendication 1 ou 2, **caractérisé en ce que** les fils métalliques ou tronçons (14) de fil métallique, cordes ou tronçons de corde formant la surface (12) de rebond ont un diamètre au plus d'1 mm.

4. Capteur de grêle suivant au moins l'une des revendications 1 à 3, **caractérisé en ce que** les fils métalliques ou tronçons (14) de fil métallique, cordes ou tronçons de corde formant la surface (12) de rebond sont des tronçons d'un seul fil métallique ou d'une seule corde, l'unique fil métallique ou l'unique corde étant tendu par l'intermédiaire d'un cadre (16)

5. Capteur de grêle suivant au moins l'une des revendications 1 à 4, **caractérisé en ce que** les fils métalliques ou tronçons (14) de fil métallique formant la surface (12) de rebond peuvent être chauffés au moyen d'une tension continue appliquée.

6. Capteur de grêle suivant au moins l'une des revendications 1 à 5, **caractérisé en ce que** chaque convertisseur (18) comprend une bobine ou un élément piézo, qui est formé et configuré pour détecter une déformation et/ou vibration d'au moins l'un des fils métalliques ou tronçons (14) de fil métallique, cordes ou tronçons de corde formant la surface (12) de rebond et émettre un signal électrique correspondant.

7. Capteur de grêle suivant au moins l'une des revendications 1 à 6, **caractérisé en ce que** les convertisseurs (18) sont reliés à une unité de mémoire et/ou à une unité (22) d'exploitation pour enregistrer et/ou exploiter les signaux de sortie associés des convertisseurs.

8. Capteur de grêle suivant la revendication 7, **caractérisé en ce que** l'unité (22) d'exploitation est configurée pour exploiter une amplitude des signaux de sortie associés des convertisseurs de telle manière que l'unité (22) d'exploitation associe des intervalles de temps des signaux de sortie associés des convertisseurs à un rebond d'un grêlon.

9. Capteur de grêle suivant la revendication 8, **caractérisé en ce que** l'unité (22) d'exploitation est configurée pour exploiter une amplitude des signaux de sortie associés des convertisseurs de telle manière que l'unité (22) d'exploitation associe un intervalle de temps des signaux de sortie associés des convertisseurs associé à un rebond d'un grêlon à une dimension de grêlon différente parmi plusieurs.
